# EUROPÄISCHE PATENTSCHRIFT

(11) **EP 2 462 015 B1**
(45) Veröffentlichungstag und Bekanntmachung des Hinweises auf die Patenterteilung: **05.03.2014**
(21) Anmeldenummer: 10739615.2
(22) Anmeldetag: 03.08.2010
(51) Int. Cl.: B60W 30/06, B62D 15/02

(54) **VERFAHREN UND STEUERUNG ZUR KALIBRIERUNG EINER AUTOMATISCH LENKENDEN EINPARKHILFE**
METHOD AND CONTROLLER FOR CALIBRATING AN AUTOMATIC STEERING PARKING AID
PROCÉDÉ ET COMMANDE POUR LE CALIBRAGE D'UNE AIDE AU STATIONNEMENT À GUIDAGE AUTOMATIQUE

(30) Priorität: 05.08.2009 DE 102009028261
(43) Veröffentlichungstag der Anmeldung: 13.06.2012
(73) Patentinhaber: Robert Bosch GmbH, 70442 Stuttgart (DE)
(72) Erfinder: NIEMZ, Volker, 71277 Rutesheim (DE)
(86) Internationale Anmeldenummer: PCT/EP2010/061256
(87) Internationale Veröffentlichungsnummer: WO 2011/015569

(56) Entgegenhaltungen:
- EP-A2- 0 872 402
- EP-A2- 1 602 560
- DE-A1-102005 014 983
- US-A1- 2009 157 260

## Beschreibung

### Stand der Technik

Die Erfindung betrifft (semi-)automatische Einparkassistenten, die das Einparken in eine Parklücke durch automatisches Lenken unterstützen.

Derartige Einparksysteme weisen Sensoren auf, um eine Parklücke beim Vorbeifahren zu erfassen, und um beim darauf folgenden Einparken im Rückwärtsgang möglichst optimal in die Parklücke einzufahren. Hierbei wird das Lenkrad automatisch geführt, wobei während des Rückwärtsfahrens ein Aktor das Lenkrad bedient, wobei der Aktor mit einer Steuerung verbunden ist, die den berechneten optimalen Lenkwinkel und somit die Einparkbahn vorsieht.

Gemäß dem Stand der Technik wird davon ausgegangen, dass die vorgegebene Einparkbahn, das heißt die Soll-Einparkbahn und somit der (momentane) Einlenkwinkel von dem Aktor und dem Lenkgetriebe genau ausgeführt wird. Dies wird im Stand der Technik beispielsweise dadurch erreicht, dass die entsprechenden Lenkkomponenten gemäß der Belastung dimensioniert sind und ein hohes Lenkdrehmoment die Einhaltung der Lenkvorgabe vorsieht. Gleichermaßen ist bekannt, geminderte maximale Einlenkwinkel zu verwenden, um eine Sicherheitsmarge zum tatsächlich möglichen Einlenkwinkel vorzusehen, sodass von einer präzisen Umsetzung unabhängig vom Einlenkwinkelbetrag ausgegangen werden kann.

Erfindungsgemäß wurde erkannt, dass derartige Steuerverfahren, bei denen davon ausgegangen wird, dass die Vorgabe präzise umgesetzt wird, beispielsweise durch Alterungsprozesse beeinträchtigt werden können oder auch hinsichtlich ihrer Auslegung nicht im vollen Umfang verwendet werden.

Es ist daher eine Aufgabe der Erfindung, ein Verfahren und eine Steuerung vorzusehen, mit dem sich Einparkhilfen präzisen ansteuern lassen. Insbesondere ist es eine Aufgabe der Erfindung, eine präzise Einparkhilfe vorzusehen, selbst wenn die betroffenen mechanischen Systeme mit einer Fehlerquelle beaufschlagt sind.

Aus der DE 10 2005 014 983 A1 und der EP 1 602 560 A2 sind jeweils Verfahren zur Unterstützung eines Fahrers bei einem Einparkvorgang bekannt, bei denen in mindestens einem Bezugspunkt eine Abweichung eines Soll-Bahnverlaufs mit einem erfassten Ist-Bahnverlauf bestimmt wird und in Abhängigkeit von der Abweichung ein korrigierter Soll-Lenkwinkel ermittelt wird.

Aus der EP 0 872 402 A3 ist ein Verfahren zur automatischen Lenkung eines Fahrzeugs bekannt, bei der ein Ist-Lenkwinkel erfasst wird und mit einem Soll-Lenkwinkel verglichen wird. Abhängig von der so bestimmten Abweichung zwischen Soll- und Ist-Lenkwinkel wird ein korrigierter Soll-Lenkwinkel bestimmt, so dass das Fahrzeug eine festgelegte Endposition erreichen kann.

### Offenbarung der Erfindung

Die Aufgabe der Erfindung wird gelöst durch das Verfahren und die Steuerung gemäß den unabhängigen Ansprüchen.

Das der Erfindung zu Grunde liegende Konzept ist es, den Einlenkwinkel nicht durch ein Steuerverfahren vorzusehen, bei dem davon ausgegangen wird, dass eine Vorgabe genau eingehalten wird, sondern durch ein Regelverfahren vorzusehen, das einen beim Lenken auftretenden Fehler berücksichtigen kann, sodass der Fehler zumindest teilweise kompensiert wird. Insbesondere lassen sich dadurch Einparksysteme vorsehen, bei denen bei einer starken Auslenkung ein mehr oder minder starker Lenkfehler auftritt, wodurch auch bei fehlerbehafteten Systemen ein präzises Lenken des Fahrzeugs beim Einparken möglich ist. Hierzu sieht das Verfahren vor, eine Soll-Einparkbahn zu berechnen (die im Stand der Technik ebenso berechnet wird und im Stand der Technik unmittelbar zur Ansteuerung eines Aktors verwendet wird), sowie einen Ist-Bahnverlauf zu erfassen, um durch Vergleich einen Fehler zu erkennen, der erfindungsgemäß kompensiert wird. Die Kompensation kann vorgesehen werden durch Korrektur der Ansteuervorgaben, die von dem Aktor geliefert werden, oder durch Kalibrierung, beispielsweise gemäß einer korrigierten Ansteuer-Kennlinie. Im Gegensatz zum Stand der Technik wird nicht davon ausgegangen, dass die Soll-Einparkbahn vom System wie vorgesehen ausgeführt wird, sondern es wird zur Kontrolle und späteren Regelung ein Ist-Bahnverlauf erfasst, um Vergleiche ausführen zu können. Dieser Ist-Bahnverlauf wird mit dem Soll-Bahnverlauf verglichen, um einen Fehler zu ermitteln. Dieser Fehler wird wiederum bei der Anwendung von Korrekturmaßnahmen verwendet, insbesondere beim Erstellen eines Korrekturparameters (der numerisch dem Fehler im Wesentlichen mittelbar oder unmittelbar entsprechen kann), wobei der Einlenkwinkel, der der Steuerung übergeben wird, gemäß einer Kombination des Einstellwinkels und des Korrekturparameters (der den Fehler widerspiegelt) vorgesehen wird. Als Korrekturparameter wird auch eine Ansteuer-Kennlinie bezeichnet, die gemäß erfassten Fehlern erstellt wird. Im Gegensatz zum Stand der Technik, bei dem der Einlenkwinkel genau der Soll-Einparkbahn entspricht, und davon ausgegangen wird, dass das System die Soll-Einparkbahn genau abfährt, wird erfindungsgemäß das Lenksystem gemäß einer Kombination dieses (Soll-)Einstellwinkels und dem Korrekturparameter angesteuert. Die Berücksichtigung eines vorher erfassten Korrekturparameters bzw. Berücksichtigung des erkannten Fehlers zwischen Ist- und Soll-Bahnverlauf erlaubt präzises Einparken gemäß der Soll-Einparkbahn auch bei fehlerbehafteten Lenksystemen, da deren Ansteuerung unter Verwendung des Korrekturparameters mit einer Fehlerkompensation einhergeht.

Die Berücksichtigung des Korrekturparameters, der den erfassten Fehler widerspiegelt, kann als Regelung sowie auch als Kalibrierung bezeichnet und vorgesehen werden, wobei die Kalibrierung darin besteht, dass das steuernde System nach wie vor durch den Soll-Bahnverlauf angesteuert wird, jedoch diesen Bahnverlauf gemäß dem Korrekturparameter ausführt und an den entsprechenden Aktor weitergibt. Die Korrektur eines derartigen Steuerungssystems entspricht einer Kalibrierung, wobei die erfindungsgemäße Kalibrierung auf den Vergleich eines Ist-Bahnverlaufs mit einem Soll-Bahnverlauf beruht. Der erfindungsgemäße Regelungsansatz wird hierbei dadurch vorgesehen, dass ein Fehler zwischen Soll-Bahnverlauf und Ist-Bahnverlauf erfasst wird und dieser Fehler in der Steuerung berücksichtigt wird. Die erfindungsgemäße Regelung unterscheidet sich von der erfindungsgemäßen Kalibrierung zwar dadurch, dass der Fehler bei der Regelung kontinuierlich während der Ansteuerung erfasst wird, und bei der Kalibrierung zunächst der Fehler erfasst wird, um für zukünftige Steuerungsprozesse verwendet zu werden, jedoch wird durch beide Aspekte das erfindungsgemäße Konzept umgesetzt, demnach ein Fehler zwischen Soll- und Ist-Bahnverlauf erfasst wird und beim Einparkvorgang dieser Fehler bei der Ansteuerung berücksichtigt wird. Auf Grund dessen betreffen erfindungsgemäß der Begriff Kalibrierung und der Begriff Regelung das gleiche Konzept, nämlich die Erfassung eines Fehlers zwischen Ist- und Soll-Verlauf und die Berücksichtigung dieses Fehlers bei der Ansteuerung. Daher wird im Weiteren der Begriff Kalibrierung nicht von dem Begriff Regelung unterschieden, falls nicht anders angegeben.

Das erfindungsgemäße Verfahren zur Kalibrierung einer Einparkhilfe betrifft daher eine Einparkhilfe, die zur aktiven Steuerung eines Einlenkwinkels eines Fahrzeugs eingerichtet ist. Als aktive Steuerung werden insbesondere elektromechanische Aktoren bezeichnet, die mit dem Lenksystem eines Fahrzeugs verbunden sind. Als Fahrzeug werden insbesondere Kraftfahrzeuge, beispielsweise Personen- oder Lastkraftfahrzeuge bezeichnet, bei denen eine Achse (oder auch beide Achsen) schränkbar sind, um die Richtung des Fahrzeugs durch Lenken zu bestimmen. Als Aktoren sind ferner elektrohydraulische oder elektropneumatische Kraftwandler geeignet. Die Steuerung wird vorzugsweise elektronisch vorgesehen, wobei jedoch grundsätzlich auch pneumatische oder hydraulische Steuerungen denkbar sind. Bei den letztgenannten Implementierungsmöglichkeiten müssen jedoch Wandler vorgesehen werden, um elektrische Sensorsignale in entsprechende physikalische Druckgrößen umzuwandeln.

Das erfindungsgemäße Verfahren sieht vor, eine Parklücke mittels Sensoren automatisch zu erfassen, das heißt durch Vorbeifahren an der Parklücke, wobei die Sensoren vorzugsweise zur Seite des Fahrzeugs gerichtet sind, um andere (parkende) Fahrzeuge oder entsprechende Hindernisse zu erfassen. Die Sensoren können beispielsweise Ultraschall- oder Radarsensoren sein.

Ferner wird ein Soll-Bahnverlauf anhand der so erfassten Parklücke berechnet. Diese Berechnung umfasst ferner einen Verlauf des Einlenkwinkels entlang der abzufahrenden Bahn. Der Bahnverlauf kann angenähert werden durch Geraden, Kreisabschnitte und Klothoiden, wobei die einzelnen Abschnitte des Bahnverlaufs einen bestimmten Verlauf des Einlenkwinkels entsprechen. Insbesondere entspricht der Bahnverlauf dem Integral des entsprechenden Verlaufs des Einlenkwinkels. Beispielsweise Kreisabschnitte ergeben sich durch einen konstanten Einlenkwinkel, dessen Betrag nicht null ist, Geraden ergeben sich durch einen konstanten Einlenkwinkel von null und Klothoiden ergeben sich durch lineare Zunahme oder lineare Abnahme des Einlenkwinkels entlang des Bahnverlaufs. Anhand der geometrischen Daten der Parklücke (insbesondere deren Länge und der Ort des vorderen Endes) kann so ein Soll-Bahnverlauf erstellt werden, der sich in Abschnitte unterteilt, welche einen bestimmten Einlenkwinkel oder einen bestimmten Verlauf des Einlenkwinkels (vergleiche beispielsweise lineare Zunahme bzw. Abnahme) entspricht.

Die Erfindung sieht ferner vor, den so erhaltenen Verlauf des Einlenkwinkels bzw. den so erhaltenen Soll-Bahnverlauf durch Ansteuern eines steuerbaren Aktors vorzusehen. Der steuerbare Aktor ist beispielsweise ein wie oben beschriebener elektromechanischer Aktor, der digitale oder analoge Signale empfängt, die den gewünschten anzusteuernden Einlenkwinkel wiedergeben, wobei der Aktor eine entsprechende Bewegung, ein entsprechendes Drehmoment oder eine entsprechende Kraft erzeugt, um das Lenksystem des Fahrzeugs gemäß vorgesehenem Einlenkwinkel zu bedienen.

Das Verfahren umfasst ferner die Schritte des Erfassens eines Ist-Bahnverlaufs, der sich durch das Steuern gemäß Soll-Bahnverlauf bzw. gemäß anzusteuerndem Einlenkwinkel ergibt. Der Ist-Bahnverlauf kann durch eine gesamte mit geometrischen Daten dargestellte Trajektorie vorgesehen sein, kann in Abschnitte unterteilt sein, in denen der anzusteuernde Einlenkwinkel einen bestimmten, genau definierten Verlauf hat (beispielsweise Abschnitte mit konstantem Winkel, mit konstantem Winkel gleich null oder mit linear steigenden/fallenden Winkel). Der Ist-Bahnverlauf kann ebenso erfasst werden durch die Erfassung des tatsächlichen, im Lenksystem des Fahrzeugs herrschenden Einlenkwinkels, da dieser mit dem Ist-Bahnverlauf eindeutig verknüpft ist. Als Ist-Bahnverlauf kann ferner eine Richtung oder ein Ist-Einlenkwinkel vorgesehen sein, der einem maximalen, anzusteuernden Einlenkwinkel entspricht. Weiterhin kann der Ist-Bahnverlauf erfasst werden durch wiederholtes Erfassen eines seitlichen Abstands, nachdem das Fahrzeug in die Parklücke eingefahren ist. Bevorzugt wird jedoch das Erfassen des Ist-Bahnverlaufs vorgesehen durch Erfassen des maximalen im Lenksystem des Fahrzeugs vorliegenden Einlenkwinkels, wobei dieser einen maximalen, angesteuerten Einlenkwinkel entspricht.

Erfindungsgemäß wird dieser Ist-Bahnverlauf (der auch nur als Winkelangabe vorgesehen sein kann) mit dem Soll-Bahnverlauf (der auch nur als Vorgabe-Einlenkwinkel vorgesehen sein kann), verglichen, und der sich aus dem Vergleich ergebende Fehler wird ermittelt. Das Vergleichen kann vorgesehen sein als Differenzbildung zwischen einem anzusteuernden Einlenkwinkel und dem tatsächlich im Lenksystem vorliegenden Einlenkwinkel (Soll-Ist-Vergleich), wobei der Fehler der Differenz entspricht. Der Fehler wird insbesondere als Wert vorgesehen, der dem gebildeten Differenzwert entspricht.

Ferner wird ein Korrekturparameter erstellt, der in einer besonders einfachen Ausführung dem Fehler gleichgesetzt ist. Im Allgemeinen ist der erstellte Korrekturparameter über eine monotone Funktion mit dem Fehler verknüpft. Nimmt somit der Betrag des Fehlers zu, so steigt auch der Korrekturparameter (bzw. dessen Betrag). Die monotone Funktion kann eine monotone oder streng monotone Funktion sein, beispielsweise eine lineare oder direkt proportionale Funktion, wobei die monotone Funktion eine monoton steigende oder eine monoton fallende Funktion sein kann. Die Funktion wird als steigende oder fallende Funktion gewählt, je nachdem, wie der so entstandene Korrekturparameter bei der Ansteuerung berücksichtigt wird. Jedoch sollte erfindungsgemäß gegeben sein, dass die Kombination des Einstellwinkels mit dem Korrekturparameter und die Erstellung des Korrekturparameters zu einer zumindest teilweisen Kompensation des Fehlers in der Steuerung führen.

Der Einlenkwinkel wird gemäß dem erfindungsgemäßen Verfahren mit dem Korrekturparameter kombiniert, beispielsweise durch Addition (oder durch Subtraktion, abhängig davon, ob die Funktion steigend oder fallend ist), wobei die Ansteuergröße dieser Kombination entspricht. Die Steuerung fußt somit nicht nur auf einem vorgegebenen Einstellwinkel, sondern auch auf einem damit vor der Ansteuerung des Aktors zu kombinierenden Korrekturparameter, der die Umsetzung zwischen anzusteuerndem Einstellwinkel und tatsächlich erzeugten Einstellwinkel wiedergibt.

Gemäß einem ersten Aspekt der Erfindung wird der Ist-Bahnverlauf erfasst durch Erfassen eines Ist-Stellwinkels anhand der Stellung eines Lenkrads, eines Lenkgestänges, des Aktors oder einer anderen Komponente des Lenksystems. Der Ist-Stellwinkel kann insbesondere erfasst werden durch einen Winkelgeber, der mit der entsprechenden Komponente verbunden ist. Die unmittelbare Erfassung des Ist-Stellwinkels kann auch vorgesehen werden durch Auswertung eines Bahnverlaufs. Wird gemäß diesem Aspekt der Erfindung der Ist-Bahnverlauf durch den Ist-Stellwinkel erfasst, so ergibt sich eine relativ einfache Berechnung, da der Ist-Stellwinkel lediglich ein einzelnes numerisches Datum ist, das dementsprechend einen geringen Berechnungsaufwand erfordert. Grundsätzlich kann die Winkelstellung durch einen Winkelsensor bzw. Winkelgeber an jeder Stelle des Lenksystems erfasst werden, das sich beim Lenken bewegt.

Gemäß einem zweiten Aspekt der Erfindung wird der Ist-Bahnverlauf nicht nur anhand einer einzelnen Winkelinformation sondern anhand einer gesamten Ortskurve erfasst, vorzugsweise in Form einer Ortskurve, die die Bewegung des Fahrzeugs wiedergibt. Die Ortskurve kann ferner die Bewegung des Fahrzeugteils darstellen oder auch die Bewegung eines Sensors bzw. einer Sensorvorrichtung, die an dem Fahrzeug angebracht ist. Grundsätzlich kann der Bahnverlauf anhand einer beliebigen Fahrzeugkomponente erfasst werden, die mit dem Fahrzeug verbunden ist. Zudem kann der Ist-Bahnverlauf erfasst werden durch wiederholte, kontinuierliche oder fortgeführte Sensorerfassung, wobei der Sensor vorzugsweise den Abstand oder auch eine Relativposition des Fahrzeugs zu einem außenstehenden Objekt erfasst.

Gemäß einer weiteren Ausführung der Erfindung umfasst das Steuern des Einlenkwinkels das Ansteuern des Aktors mit einem Soll-Maximaleinlenkwert. Das Erfassen des Ist-Bahnverlaufs umfasst: Erfassen eines Ist-Maximaleinlenkwerts, der sich durch das Ansteuern mit dem Soll-Maximaleinlenkwert ergibt. Gemäß dieser Ausführung wird ein Soll-Maximaleinlenkwert vorgegeben, und es wird mittels eines Ist-Maximaleinlenkwerts ermittelt, ob die Lenkung dem Soll-Maximaleinlenkwert vollständig folgt bzw. präzise umsetzt, oder ob sich ein geringerer Ist-Maximaleinlenkwert ergibt, als der geplante Maximaleinlenkwert, der sich durch Ansteuerung des Soll-Maximaleinlenkwerts bei einem optimalen System ergeben würde. Somit wird ein Soll-Maximaleinlenkwert als ein Soll-Eingabepunkt verwendet, wobei durch Vergleich mit dem tatsächlich ausgeführten Ist-Maximaleinlenkwert ergibt, ob das System dem Soll-Maximaleinlenkwert vollständig folgt oder ob das System dem Soll-Maximaleinlenkwert auf Grund von Fehlern nicht folgen kann. Der Fehler ergibt sich durch die Differenz zwischen Soll-Maximaleinlenkwert und Ist-Maximaleinlenkwert. Die Differenz wird vorzugsweise mit einem Vorzeichen beaufschlagt, das die Lenkrichtung berücksichtigt. Insbesondere kann die Differenz gebildet werden durch die Differenz zwischen dem Betrag des Soll-Maximaleinlenkwerts und dem Betrag des Ist-Maximaleinlenkwerts.

Gemäß der vorangehenden Ausführungsform wird der Fehler ermittelt durch Vorgabe eines maximalen Einlenkwerts und durch Beobachten der Reaktion durch das Lenksystem. Der Ist-Maximaleinlenkwert kann hierbei erfasst werden durch Ermitteln der Stellung des Lenkrads, des Lenkgestänges, des Aktors oder einer anderen Komponente des Lenksystems des Fahrzeugs. Hierbei beruht die Ermittlung des tatsächlichen, umgesetzten Ist-Maximaleinlenkwerts auf der Erfassung eines Winkels mittels eines Winkelgebers. Alternativ kann der Ist-Maximaleinlenkwert auch ermittelt werden auf Grund der maximalen Krümmung des erfassten Ist-Bahnverlaufs. Hierbei wird die maximale Krümmung eines Abschnitts der Ortskurve ermittelt, wobei sich dieser Abschnitt ein Resultat des Soll-Maximaleinlenkwerts ergibt. Damit ist gewährleistet, dass die maximale Krümmung innerhalb dieses Abschnitts das Resultat der Ansteuerung durch den Soll-Maximalwert ist. Die Ortskurve entspricht hierbei dem Ist-Bahnverlauf, der die Bewegung des Fahrzeugs wiedergibt. Der Ist-Bahnverlauf ist somit die Ortskurve einer Komponente, die am Fahrzeug befestigt ist, beispielsweise ein Sensor, mit dem die Parklücke erfasst wird. Beim letztgenannten Verfahren wird somit der Ist-Maximaleinlenkwert ermittelt durch die Betrachtung des Bewegungsverlaufs des Fahrzeugs.

Gemäß der Erfindung, wird ein erster Einparkschritt ausgeführt, und unmittelbar oder mittelbar danach folgend ein zweiter Einparkschritt, wobei bei beiden Einparkschritten unterschiedliche maximale Einlenkwinkel verwendet werden. Der maximale Einlenkwinkel ist bei dem zweiten Einparkschritt (im Allgemeinen: die Stellgröße) größer als beim ersten Einparkschritt, um so sukzessiv die Grenzen des Lenksystems zu ermitteln. Als Grenzen des Lenksystems werden hierbei Steuerparameter bezeichnet, bei denen eine Zunahme der Auslenkung zu deutlichen Fehlern führt. Dies ist beispielsweise der Fall, wenn eine Betriebsgrenze, beispielsweise die Auslenkgrenze, eine maximale Winkelstellung des Aktors oder ein maximales Drehmoment des Aktors erreicht wird. An diesem Punkt beginnt ein Bereich des Übersteuerns, der sich darin äußert, dass eine weitere zusätzliche Erhöhung des Ansteuersignals nur unvollständig umgesetzt wird. Dies ist beispielsweise auch der Fall bei starken Lenkeinschlägen, bei denen die Reifen eine zu starke Gegenkraft entwickeln als das der Aktor die Reifen steuerungsgemäß weiter einlenken kann. Weitere Fehlerquellen sind beispielsweise Lenkspiel oder Reibung innerhalb des Lenksystems bei starken Ausschlägen, wobei die Inkrementierung bzw. Erhöhung zwischen zwei Einparkschritten dazu dient, den kritischen Punkt zu erfassen, ab dem die Winkelansteuerung fehlerbehaftet ist. Daher umfasst das Verfahren das Ausführen eines zweiten Einparkschritts durch Ansteuerung mit einem maximalen Einlenkwinkel, der gegenüber dem ersten Einparkschritt um ein Ansteuer-Inkrement erhöht ist. Hierbei werden die maximalen Ist-Krümmungen des jeweils resultierenden Ist-Bahnverlaufs miteinander verglichen, um zu erfassen, ob das Ansteuer-Inkrement vollständig oder nur teilweise vom Lenksystem umgesetzt wird. Wird erfasst, dass die Erhöhung des Ansteuer-Inkrements nur ungenügend in einen zusätzlichen Ist-Lenkwinkel umgesetzt wird, dann wird dieser Winkel vorzugsweise gespeichert und zukünftige Soll-Bahnverläufe werden derart ausgestaltet, dass diese eine maximale Krümmung aufweisen, die nicht oberhalb der erfassten maximalen Ist-Krümmung (oder den zugehörigen Einlenkwinkel) liegt. Erfindungsgemäß werden derartige erfasste maximale Einlenkwinkel zwischengespeichert, um bei folgenden Einparkschritten berücksichtigt werden zu können. Die so beschriebene Ausführungsform basiert darauf, einen Fehler zu provozieren, in dem der maximale Einlenkwinkel bis zu einer Ungenauigkeitsgrenze erhöht wird, bis zu der das System den vorgegebenen Winkel folgen kann, jedoch nach dem maximalen Einlenkwinkel starke Ungenauigkeiten erzeugt. Der Korrekturparameter besteht dann in einem Wert, der eine Deckelung vorgibt, so dass bei folgenden Soll-Bahnverläufen kein Einlenkwinkel größer als der so erhaltene maximale Einlenkwinkel verwendet wird. Diese Deckelung kann auch zur Erstellung/Modifikation einer Ansteuer-Kennlinie verwendet werden.

Das Ansteuer-Inkrement wird mit jedem Einparkschritt zunehmend erhöht, und die sich bei jedem Einparkschritt ergebende maximale Ist-Krümmung wird konkret erfasst. Die jeweiligen maximalen Ist-Krümmungen der Einparkschritte werden miteinander verglichen. Insbesondere wird hierbei die Zunahme der zugehörigen maximalen Ist-Krümmungen aufeinander folgender Einparkschritte erfasst. Der Korrekturparameter ergibt sich dann durch Erkennung einer Verringerung oder eines Ausbleibens der Zunahme beim Vergleich von maximalen Ist-Krümmungen aufeinander folgender Schritte. Wird beispielsweise der maximale Einlenkwinkel regelmäßig um ein Ansteuer-Inkrement erhöht, dann ist eine Verringerung oder ein Ausbleiben der Zunahme zu erkennen an einem abflachenden Verlauf der Zunahme der maximalen Ist-Krümmungen. Der Korrekturparameter gibt dann eine Deckelung des ansteuerbaren Einlenkwinkels an. Dies entspricht einer Kalibrierung, wodurch Soll-Einparkbahnen, die danach erzeugt werden, kalibriert sind und somit keine maximale Krümmung aufweisen, die gleich oder größer als die maximale Ist-Krümmung ist.

Anstatt die Grenze einer fehlerfreien Ansteuerung zu erfassen, indem der maximale Einlenkwinkel für aufeinander folgende Parkschritte erfasst wird, kann der Einlenkwinkel auch während ein und desselben Einparkschritts sukzessive erhöht werden. Hierbei wird gleichzeitig der resultierende Ist-Bahnverlauf erfasst (entweder durch Erfassen der Ortskurve, entlang der sich das Fahrzeug bewegt, oder durch Ermitteln der Stellung des Lenkrads, des Lenkgestänges, des Aktors oder einer anderen Lenksystemkomponente), und der zugehörige (aktuelle) angesteuerte Einlenkwinkel (gemäß dem Soll-Bahnverlauf) wird erfasst. Ergibt sich die Situation, das zwar der Einlenkwinkel weiterhin erhöht wird, jedoch der Ist-Bahnverlauf bzw. die Stellung der Lenksystemkomponente diesen zunehmenden Einlenkwinkel nicht mehr (vollständig) folgt, dann kann der angesteuerte Einlenkwinkel bzw. die Stellung des Lenkrads ermittelt werden, ab der eine Zunahme des Einlenkwinkels nicht mehr die gewünschte Zunahme der Stellung des Lenkrads zur Folge hat. Hierbei wird die Krümmung kontinuierlich oder insbesondere Schrittweise, das heißt inkremental, erhöht. Die Zunahme der Krümmung des sich daraus ergebenen Ist-Bahnverlaufs bzw. die Zunahme der Winkelstellung einer Längssystemkomponente wird erfasst und durch Vergleich ergibt sich, ob das System momentan in einem fehlerfreien Steuerungsbereich arbeitet oder bereits in einem fehlerbehafteten Steuerbereich arbeitet. Hierbei bedeutet zunehmende Krümmung bzw. zunehmender Einlenkwinkel eine zunehmende Stärke des Einlenkens, unabhängig vom Vorzeichen bzw. der Einlenkrichtung, so dass diese Begriffe gleichbedeutend sind mit dem Betrag der Krümmung bzw. mit dem Betrag des Einlenkwinkels. Wird daher der Einlenkwinkel erfasst, bei dem die Zunahme der Krümmung (des Betrags der Krümmung) des Ist-Bahnverlaufs bzw. die Stellung der Längssystemkomponente geringer ist als die Zunahme der Krümmung des Soll-Bahnverlaufs bzw. geringer als die Zunahme des angesteuerten Einlenkwinkels. Der Korrekturparameter wird dann mit einem Wert vorgesehen, der dieser Krümmung bzw. dieser Stellung oder dem entsprechenden Einlenkwinkel entspricht, wobei der Korrekturparameter auf einen Wert gesetzt wird, der dem Einlenkwinkel geringerer Zunahme entspricht. Hierbei ist die Erfassung der geringeren Zunahme (des Einlenkwinkels) gleichbedeutend mit der Erfassung eines Bereichs, in dem das Steuersystem nicht mehr linear arbeitet bzw. fehlerbehaftet den Soll-Bahnverlauf bzw. den anzusteuernden Einlenkwinkel umsetzt. Der entsprechende Korrekturparameter wird gespeichert und im Weiteren als Deckelung für den Soll-Bahnverlauf vorgesehen, so dass in einem weiteren Einparkschritt das Steuern des Einlenkwinkels gemäß dieser Deckelung nicht über diese hinausgeht. Insbesondere wird der Soll-Bahnverlauf folgender Parkschritte derart vorgesehen, dass dessen Maximalkrümmung (vom Betrag her) nicht größer als diese Deckelung ist.

Zur Erfassung, ob bei einem zunehmenden Einlenkwinkel der daraus resultierende Ist-Bahnverlauf folgt, kann ein (vorgegebener) Schwellwert vorgesehen werden, der mit dem Betrag der Abweichung verglichen wird und erst ab einer vorbestimmten Fehlerbetragsschwelle bzw. Differenz zur Erfassung des Korrekturparameters führt. Dies kann beispielsweise realisiert werden mittels eines Vergleichers und einem vorgegebenen Schwellwert, wobei der Vergleicher den Schwellwert mit der Abweichung zwischen Soll- und Ist-Betrag vergleicht und bei Überschreiten des Schwellwerts das erfindungsgemäße System dazu veranlasst, den zugehörigen Einlenkwinkel oder die zugehörige Soll-Krümmung zu speichern. Dieser gespeicherte Wert entspricht einem Kalibrationswert, der bei folgenden Einparkmanövern verwendet wird, um zu vermeiden, dass der anzusteuernde Einlenkwinkel in einem Bereich liegt, in dem die Steuerung fehlerbehaftet ist.

Das so beschriebene Verfahren kalibriert somit eine Steuerung gemäß einem Normintervall, in dem die anzusteuernden Einlenkwinkel zulässig sind und einer Grenze, ab der die Beträge des Einlenkwinkels zu einer fehlerbehafteten Umsetzung führen. Stattdessen oder in Kombination hierzu kann auch ein linearer Fehler erfasst werden und zur Kalibrierung dienen, wobei der anzusteuernde Einlenkwinkel erhöht wird und die zugehörige Umsetzung durch Erfassen des Ist-Bahnverlaufs wie oben beschrieben mit diesem verglichen wird. Wird so erkannt, dass die Umsetzung nicht vollständig vorgesehen wird und dass die Ist-Winkelzunahme sich von der Soll-Winkelzunahme unterscheidet, dann kann der Quotient aus Soll- und Ist-Winkelzunahme gebildet werden. Dieser Quotient dient zur Kalibrierung bei weiteren Ansteuerungen und Einparkschritten, beispielsweise um den anzusteuernden Einlenkwinkel mit dem Kehrwert des Quotienten zu multiplizieren, bevor der einzustellende Einlenkwinkel zur Ansteuerung verwendet wird. Hierdurch können Fehler kompensiert werden, die linear bzw. direkt proportional mit zunehmendem Einlenkwinkel steigen.

Die Erfindung wird ferner von einer Steuerung realisiert, die zur Ausführung des oben beschriebenen Verfahrens dient. Die Steuerung umfasst einen Eingang zur Erfassung körperlicher Umgebungsmerkmale (zur Erfassung der Parklücke) sowie zur Erfassung des Ist-Bahnverlaufs bzw. der Richtungsänderung, die sich durch die Ansteuerung ergibt. Die Steuerung umfasst ferner einen Ausgang, um einen Aktor gemäß dem anzusteuernden Einlenkwinkel anzusteuern. Eine Berechnungseinheit der Steuerung ist mit dem Eingang und dem Ausgang verbunden und berechnet den Soll-Bahnverlauf anhand der Umgebungsmerkmale. Ferner berücksichtigt diese Berechnungseinheit den Korrekturparameter, in dem der Soll-Bahnverlauf beispielsweise mit einer maximalen Krümmung vorgesehen ist, die unter einem Einlenkwinkel liegt, ab dem der Ist-Bahnverlauf nur noch fehlerhaft den angesteuerten Einlenkwinkel folgt. Die Steuerung umfasst ferner einen Vergleicher, um diesen Fehler zu erfassen. Insbesondere ist der Vergleicher eingerichtet, den Ist-Bahnverlauf mit dem Soll-Bahnverlauf zu vergleichen, wobei der Vergleicher ferner einen etwaigen Fehler ermitteln kann. Die Steuerung umfasst ferner eine Korrektureinrichtung, die die oben beschriebene Berücksichtigung des Korrekturparameters durchführt. Die Korrektureinrichtung ist eingerichtet, den Korrekturparametern in Abhängigkeit von dem Fehler zu erstellen, und ist eingerichtet, die Soll-Einparkbahn, den anzusteuernden Einlenkwinkel oder beides zu korrigieren. Hierbei kombiniert die Korrektureinrichtung den Soll-Bahnverlauf bzw. den einzustellenden Einlenkwinkel mit dem Korrekturparameter. Gemäß einer besonders bevorzugten Ausführungsform umfasst die Kombination, welche von der Korrektureinrichtung vorgesehen wird, die Deckelung eines zu erstellenden Soll-Bahnverlaufs gemäß dem maximalen Einlenkwinkel, ab dem das Lenksystem nur fehlerhaft den Soll-Vorgaben folgt.

Zur Erfassung des Ist-Bahnverlaufs bzw. des Einlenkwinkels umfasst die Steuerung ferner einen Winkelgeber, der mit einer Lenksystemkomponente mechanisch verbunden werden kann. Diese Lenksystemkomponente kann als Lenkrad, Lenkgestänge oder als Aktor vorgesehen sein, die die Lenkung betätigt. Der Winkelgeber erfasst die Winkelstellung der jeweiligen Fahrzeugkomponente, die auch das Fahrgestell des Fahrzeugs sein kann, wobei der Winkelgeber ferner mit dem Eingang verbunden ist, um an Diesen Winkelsignale abzugeben, die für den erfassten Winkel stehen.

Zur Erfassung der maximal möglichen Krümmung bzw. des maximal möglichen Einlenkwinkels umfasst die Steuerung ferner eine Inkrementiereinrichtung, um ein Ansteuer-Inkrement bzw. den anzusteuernden Einlenkwinkel zu erhöhen, vorzugsweise schrittweise mit einer konstanten Schritthöhe. Die zugehörige, sich ergebende maximale Krümmung des sich ergebenden Ist-Bahnverlaufs wird erfasst und ausgewertet. Die Steuerung wertet hierbei aus, ob die Erhöhung des Ansteuer-Inkrements zu einer maximalen Krümmung des Ist-Bahnverlaufs führt. Die Steuerung erfasst, ob die Erhöhung des Ansteuer-Inkrements der Zunahme der Krümmung des Ist-Bahnverlaufs entspricht, oder ob die Erhöhung des Ansteuer-Inkrements kleiner als die maximale Krümmung des Ist-Bahnverlaufs ist. Hierbei erfasst die Steuerung, ob die Erhöhung des Ansteuer-Inkrements zu einer maximalen Krümmung des Ist-Bahnverlaufs führt, die weniger als ein vordefinierter Schwellwert gegenüber einer maximalen Krümmung, die sich vor der Erhöhung des Ansteuerinkrements ergab, erhöht ist. Mit anderen Worten wird durch die Steuerung anhand eines vordefinierten Schwellwerts die Abweichung zwischen Soll- und Ist-Winkel bei Erhöhung des Ansteuer-Inkrements erfasst. Ein Vergleicher vergleicht den Schwellwert mit der Differenz zwischen den jeweiligen Zunahmen des Soll- und des Ist-Werts. Eine Überschreitung des Schwellwerts bedeutet hierbei, dass der Ist-Winkel nicht fehlerfrei dem Soll-Winkel folgt und sich somit die Steuerung in einem Bereich befindet, in dem die Soll-Vorgabe nicht fehlerfrei umgesetzt wird. Wird der Schwellwert überschritten, so wird der angesteuerte Einlenkwinkel oder die Krümmung des Ist-Bahnverlaufs als Kalibrierungsgrundlage gespeichert. Bei weiteren Ansteuerungen bzw. Einparkmanövern wird durch einen Beschränker des Systems der einzustellende Einlenkwinkel bzw. die Krümmung des Soll-Bahnverlaufs gemäß der gespeicherten Kalibrierungsgrundlage gedeckelt um zu gewährleisten, dass das System während des Einparkens nicht in einen Bereich fährt, in dem der Ist-Winkel nicht mehr vollständig dem Soll-Winkel folgt. Die Kalibrierungsgrundlage kann in einem Speicher des Systems hinterlegt werden, wobei der Beschränker des Systems mit diesem Speicher verbunden ist, um bei der Erstellung des Soll-Bahnverlaufs bzw. bei der Steuerung des einzustellenden Einlenkwinkels die Kalibrierung zu berücksichtigen.

Die erfindungsgemäße Vorrichtung umgesetzt werden mittels eines Mikrocontrollers und zugehöriger Software bzw. zugehöriger Softwareelemente, wobei die Software bzw. die Softwareelemente einzelne oder mehrere Komponenten der Steuerung realisieren. Anstatt oder in Kombination mit einem programmierbaren Prozessor können auch Ruhigschaltungen verwendet werden, deren Funktion durch Ihre Beschaltung vorbestimmt ist. Insbesondere kann der Vergleicher durch eine Hardware-Vergleicherschaltung vorgesehen werden. Der Eingang und der Ausgang können sowohl als digitale als auch als analoge Signalschnittstellen vorgesehen werden, wobei bei der Verwendung von analogen Signalen der Eingang bzw. der Ausgang vorzugsweise ein A/D- bzw. ein D/A-Wandler umfasst.

Gemäß einer bevorzugten Ausführungsform der Vorrichtung und des Verfahrens kann zunächst für mehrere aufeinander folgende Einparkprozesse für jeden aufeinander folgenden Einparkprozess der maximale Soll-Einlenkwinkel um ein Inkrement erhöht werden, bis der maximal mögliche Einlenkwinkel erfasst ist, ab dem das Lenksystem nicht mehr oder nur noch fehlerbehaftet dem Soll-Einlenkwinkel folgt. Im Folgenden wird dann die erfindungsgemäße Kalibrierung als Überwachungsmaßnahme verwendet, die gegebenenfalls in die Ansteuerung eingreift. Nachdem dieser maximal mögliche Einlenkwinkel erfasst wurde wird dieser bei folgenden Einparkprozessen berücksichtigt wird (durch Erstellen von Soll-Bahnverläufen mit einer maximalen Krümmung, die nicht über den maximal möglichen Einlenkwinkel hinausgeht) kann erfindungsgemäß die Ausführung des Soll-Bahnverlaufs in weiteren Einparkprozessen überwacht werden durch Erfassung des Soll-Bahnverlaufs mit dem Ist-Bahnverlauf, um bei während der weiteren Einparkprozesse auftretenden Fehler den maximal möglichen Einparkwinkel neu zu bestimmen (wie oben beschrieben) um diesen dann für noch folgende Einparkprozesse wie oben beschrieben zu berücksichtigen. Für beide Prozesse werden die gleichen Sensoren (Abstandssensor, Winkelgeber) verwendet. Zudem kann der Prozess zur Erfassung des maximal möglichen Einlenkwinkels wiederholt werden, um Änderungen der Straßen-/Reifenbedingungen Rechnung tragen zu können. So wird beispielsweise Prozess zur Erfassung des maximal möglichen Einlenkwinkels entweder regelmäßig wiederholt (insbesondere für jeden n-ten Einparkprozess mit beispielsweise n = 20, 50 oder 100) oder der Prozess wird bei erfassten Änderungen am Fahrwerk wiederholt, beispielsweise nach Inspektionen und/oder wenn neue Reifen aufgezogen wurden, oder beides. Bei erneuter Kalibrierung wird der maximal mögliche Einlenkwinkel neu ermittelt und kann kleiner als der vorherige maximal mögliche Einlenkwinkel sein, bsp. wenn Reibungskräfte im Lenksystem zugenommen haben, oder kann größer als der vorherige maximal mögliche Einlenkwinkel sein, wenn Reibungskräfte verringert wurden, wie es der Fall ist, wenn ein Wechsel von Winterreifen auf Sommerreifen ausgeführt wurde. Die erfindungsgemäße Steuerung weist hierzu einen Eingang auf, mit dem Inspektionen oder Reifenwechsel erfasst werden können, bsp. eine Schnittstelle für Benutzereingaben.

### Kurzbeschreibung der Figuren

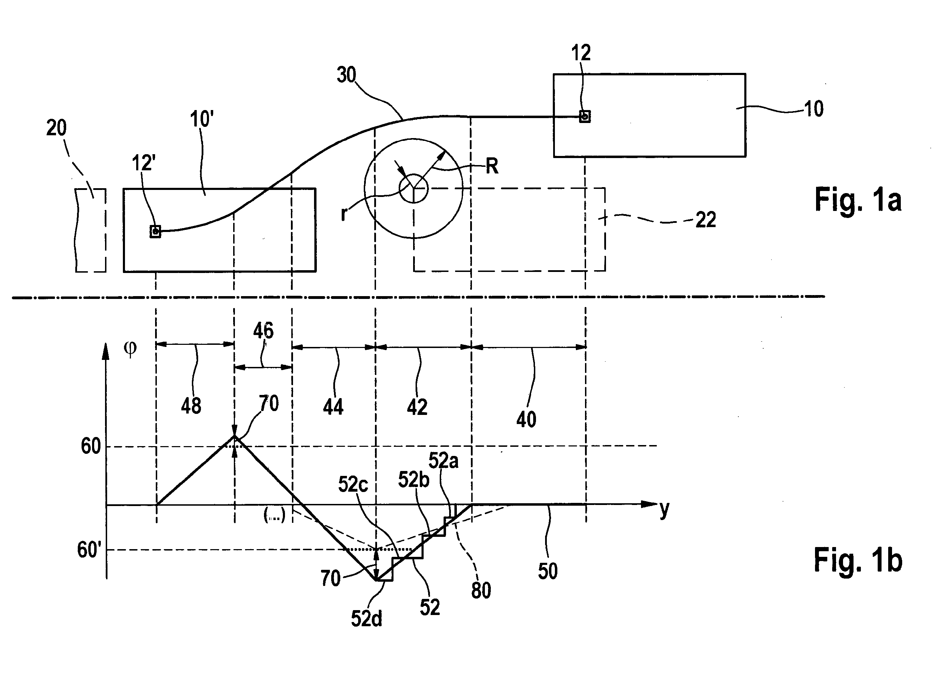

Die Figuren 1a, 1b, zeigen eine beispielhafte Situation für einen erfindungsgemäßen Einparkvorgang, wobei die Figur 1b den zugehörigen Winkeleinschlag darstellt.

Die Figuren 1a und 1b zeigen gemeinsam die beispielhafte Situation anhand der als Figur 1a bezeichneten Hälfte oberhalb der strichpunktierten Linie und anhand der als Figur 1b bezeichneten Hälfte unterhalb der strichpunktierten Linie.

Die Figur 2 zeigt eine Ausführung der erfindungsgemäßen Steuerung zur Ausführung des erfindungsgemäßen Verfahrens.

### Detaillierte Beschreibung der Figuren

Die Figur 1a zeigt ein Fahrzeug in einer ersten Position 10 und einer zweiten Position 10', wobei das Fahrzeug mit dem Bezugszeichen 10 nach Vorbeifahrt an einer Parklücke rückwärts in diese einparkt und in der Position 10' verbleibt. Die Parklücke erstreckt sich zwischen den Fahrzeugen 20, 22, deren Umfang gestrichelt dargestellt ist und zwischen denen die Parklücke für das Fahrzeug 10' angeordnet ist. Die erfindungsgemäße Einparkhilfe steuert den Lenkvorgang, so dass sich beim rückwärts einparken ein Soll-Bahnverlauf 30 ergibt, der auch dem Ist-Bahnverlauf entspricht. Betrachtet wird die Bewegung eines Punktes 12, 12' des Fahrzeugs 10,10', der in einem Abstand 40 am Fahrzeug 22 vorbeigelenkt wird. Dieser Punkt 12, 12' des Fahrzeugs 10, 10' liegt innerhalb des Fahrzeugs, so dass sich für eine Fahrzeugkante ein Mindestabstand r ergibt. Der Abstand bezieht sich auf die kritischste Stelle des Fahrzeugs 22, das heißt die der Parklücke zugewandte Ecke, die auch dem Fahrzeug 10, 10' zugewandt ist.

Der Soll-Bahnverlauf umfasst einen ersten Abschnitt 40, in dem das Fahrzeug geradeaus parallel zu Fahrzeug 22 nach links fährt. Es schließt sich ein zweiter Abschnitt 42 an, in dem der Einlenkwinkel ϕ des Fahrzeugs linear zunimmt, wodurch sich eine zunehmende Krümmung ergibt. In einem dritten Abschnitt 44 verringert sich der Einlenkwinkel linear bis zu einem Einlenkwinkel ϕ von null. Am linken Ende des Abschnitts 44 ergibt sich somit punktuell ein Einlenkwinkel ϕ von null, bei dem der Soll- bzw. Ist- Bahnverlauf zumindest momentan der Längsachse des Fahrzeugs in der aktuellen Stellung entspricht. An den Abschnitt 44 schließt sich ein Abschnitt 46 an, in dem der Einlenkwinkel ϕ zunehmend erhöht wird, bis ein Maximum erreicht wird. Es schließt sich ein fünfter Abschnitt 48 an, in dem die Orientierung des Fahrzeugs parallel zur ursprünglichen Orientierung ausgerichtet wird, in dem der Einlenkwinkel ϕ kontinuierlich (d.h. linear) auf null verringert wird.

In der Figur 1b ist beispielhaft der Einlenkwinkel ϕ mit durchgezogener Linie dargestellt, wobei sich die einzelnen y-Abschnitte 40-48 auf den jeweiligen Ort des Fahrzeugs in der Figur 1a beziehen. Die durchgezogene Linie 50 entspricht dem Verlauf des Einlenkwinkels bei einem idealen System, das keine erfindungsgemäße Kalibrierung erfordert.

Wie bereits bemerkt sind reale Systeme jedoch mit einem maximalen Einlenkwinkel behaftet, der in der Figur 1b mit 60, 60' bezeichnet ist. Ab diesem Winkel unterstützt das Aktor basierte Lenksystem nicht mehr den Soll-Bahnverlauf bzw. den anzusteuernden Einlenkwinkel, sondern der Betrag der Krümmung steigt nicht mehr mit zunehmendem Betrag der Krümmung des Soll-Bahnverlaufs. Die resultierende Kappung ist in der Figur 1b punktiert dargestellt, wobei ab dem Maximaleinlenkwert 60, 60' das Lenksystem trotz Erhöhung der Soll-Vorgabe nicht mehr vollständig folgt. Erfindungsgemäß wird der Fehler 70 ermittelt, der zwischen Soll- und Ist-Vorgabe des Einlenkwinkels besteht, um den Korrekturparameter als Deckelung des einzustellenden Einlenkwinkels vorzusehen. Bei zukünftigen Berechnungen des Soll-Bahnverlaufs wird diese Deckelung berücksichtigt, die sich durch die Grenzwerte 60, 60' ergeben, wobei sich ein angepasster Soll-Bahnverlauf 80 ergeben kann. Der gestrichelte dargestellte gemäß Korrekturparameter korrigierte Soll-Bahnverlauf 80 berücksichtigt den geringeren maximalen Einlenkwert (60'), wobei zu erkennen ist, dass die Einlenkphase im korrigierten Soll-Bahnverlauf 80 früher beginnt, um trotz geringeren Maximaleinlenkwerts zu gewährleisten, dass das Fahrzeug nicht seitlich versetzt zu den Fahrzeugen 20, 22 zu liegen kommt, und somit das Fahrzeug nicht optimal in der Parklücke vorgesehen wird. Der in Figur 1b dargestellte korrigierte Soll-Bahnverlauf weist eine ähnliche Form auf, wie der unkorrigierte Verlauf 50. Insbesondere haben beide Verläufe keinen Abschnitt, in dem ein Einlenkwinkel ungleich null beibehalten wird. Jedoch könnte ein entsprechender angepasster Soll-Bahnverlauf eine andere Form als ein ohne Korrektur vorgesehener Soll-Bahnverlauf haben, beispielsweise indem der angesteuerte Einlenkwinkel beim Erreichen des Maximaleinlenkwerts konstant bleibt, wodurch sich ein trapezoider Verlauf des Einlenkwinkels ϕ ergibt.

Erfindungsgemäß wird der anzusteuernde Einlenkwinkel stufenweise erhöht, siehe Kurvenverlauf 52, wobei die Inkremente jeweils gleich sind. Die Schrittbreite des anzusteuernden Einlenkwinkels der Verlauf 152 ist vergrößert dargestellt, um die Erfindung besser zu illustrieren. Es ist zu erkennen, dass im ersten Iterationsschritt 52a und im zweiten Iterationsschritt 52b der anzusteuernde Einlenkwinkel auch vollständig umgesetzt wird, da der Maximaleinlenkwert 60' nicht erreicht wird. Während dem Inkrementierungsschritt 152c ergibt sich jedoch ein Fehler zwischen einzustellendem Einlenkwinkel des Verlaufs 152 und dem überschrittenem Ist-Maximaleinlenkwert, der mit gepunkteter Linie dargestellt ist. Dieser Fehler zwischen einzustellendem Einlenkwinkel des Iterationsschritts 52c wird mit dem Ist-Maximaleinlenkwert 60' verglichen (der auch den während Inkrementierungsschritt 52c vorliegende Ist-Einlenkwert entspricht), wobei der Fehler relativ gering ist, da in dem in Figur 1b dargestellten Beispiel der einzustellende Einlenkwinkel im Inkrementierungsschritt 52c nur knapp über dem Ist-Maximaleinlenkwert liegt (gestrichelt dargestellt), der auch dem Ist-Einlenkwert entspricht. Der Fehlerwert ist kleiner als ein Fehlerschwellwert, so dass beim Vergleich beider Werte sich noch kein Vergleichsergebnissignal ergibt, das dem Auftreten eines Fehlers entspricht. Da der folgende Inkrementierungsschritt 52d jedoch zu einem anzusteuernden Einlenkwinkel führt, der deutlich über dem Maximaleinlenkwert ist, ergibt sich ein Fehler 70, der deutlich über dem zulässigen Fehler liegt. Der Vergleich mit dem Fehlerschwellwert führt daher zur Erkennung des Auftretens eines Fehlers bei diesem Soll-Winkel, Im Vergleich zum Inkrementierungsschritt 52c ist daher klar, dass während des Inkrementierungsschritts 52c der einzustellende Einlenkwinkel innerhalb möglicher Parameter lag, und der Inkrementierungsschritt 52d zu einem zu hohen einzustellenden Einlenkwinkel (d.h. Soll-Winkel) führte. Daher wird der einzustellende Einlenkwinkel des Inkrementierungsschritts 52c verfahrensgemäß als Deckelung gespeichert, der den Korrekturparameter widerspiegelt. Bei folgenden Einparkverfahren wird dann der hinterlegte Korrekturwert in Höhe des Einlenkwinkels 52c nicht mehr überschritten. Das gleiche gilt auch während desselben Einparkprozesses, so dass bei einem Schritt 52d, der zu einem unerwünscht hohem Fehlerwert führt, der anzusteuernde Einlenkwinkel automatisch auf den Wert des Inkrementierungsschritts 52c zurückgefahren wird. Gleichzeitig wird dies bei der Vorgabe des Soll-Bahnverlaufs berücksichtigt, um das Fahrzeug wie gewünscht einzuparken, ohne jedoch das Lenksystem in einem Bereich zu betreiben, der mit zu hohen Fehlern verknüpft ist, die wiederum zu unerwünschten Fehlstellungen des einzuparkenden Fahrzeugs führen würden.

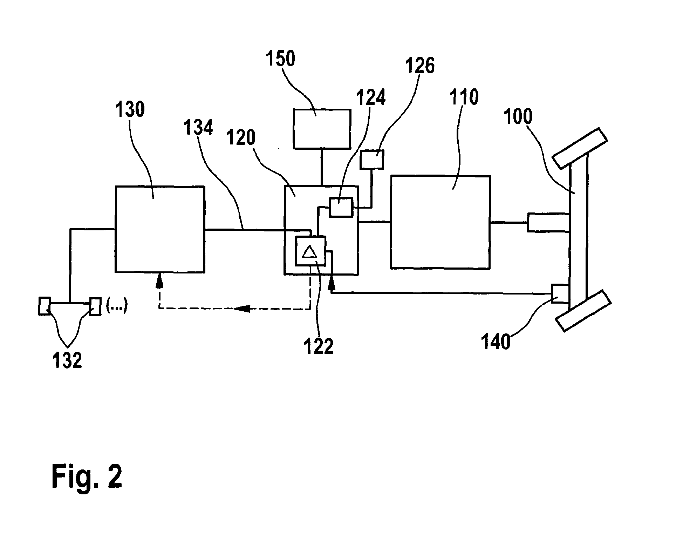

Die Figur 2 zeigt eine erfindungsgemäße Steuerung in Übersichts-Blockdarstellung. Das System von Figur 2 umfasst ein Lenksystem 100 eines Fahrzeugs (nicht dargestellt), wobei das mechanische Lenksystem 100 von einem Aktor 110 mechanisch betätigt wird. Dieser Aktor 110 entspricht einem elektromechanischen Wandler, der von einer Ansteuereinheit 120 elektrisch angesteuert wird. Die Ansteuereinheit 120 empfängt Signale von einer Berechnungseinheit 130, die einen Soll-Bahnverlauf vorgibt. Der Soll-Bahnverlauf wird anhand von Parkunterstützungssensoren 132 erfasst, die als Abstandssensoren an einer Außenseite des Fahrzeugs angeordnet sind. Alternativ kann eine Fahrzeugkamera und eine Bildverarbeitungsvorrichtung zur Parklückenerfassung verwendet werden. Das Lenksystem 100 ist an einem Sensor 140 gekoppelt, der den Ist-Einlenkwinkel erfasst und an die Einsteuereinheit 120, insbesondere an den Vergleicher 122 der Einsteuereinheit an 120 weitergibt. Der Vergleicher 122 der Ansteuereinheit 120 empfängt ferner einen Soll-Einlenkwinkel (als Resultat des errechneten Soll-Bahnverlaufs), das heißt den anzusteuernden Einlenkwinkel, über eine Verbindung 134, die auch die Ansteuereinheit 120 mit der Berechnungseinheit 130 verbindet. Der Vergleicher 122 vergleicht die Soll-Vorgabe, die durch die Verbindung 134 der Ansteuereinheit 120 zugeführt wird, mit den Sensordaten des Sensors 140 um zu erfassen, wenn der anzusteuernde Einlenkwinkel nicht mehr vollständig realisiert wird und somit der Ist-Einlenkwinkel geringer ist als der anzusteuernde Einlenkwinkel. Die Differenz wird von dem Vergleicher 122 als Fehler erkannt. Wenn der Fehler einen Schwellwert erreicht, dann wird der zugehörige Ist-Einlenkwinkel (der vom Sensor 140 vorgesehen wird) in den Korrekturparameterspeicher 150 eingespeichert. Der Korrekturparameterspeicher 150 speichert dann den Ist-Einlenkwinkel, ab dem keine fehlerfreie Ansteuerung mehr möglich ist. Gemäß einer bevorzugten Ausführungsform speichert der Speicher 150 ferner die Größe des damit verknüpften Fehlers. Um den Fehler, der von dem Vergleicher 122 vorgesehen wird, mit einem maximal zulässigen Fehler zu vergleichen, umfasst die Ansteuereinheit 120 ferner einen Schwellwertschalter 124, der einen maximal zulässigen Fehler von einem Fehlerspeicher 126 erhält. Der Vergleicher 122 gibt gemäß einer bevorzugten Ausführungsform, die in Figur 2 gestrichelt dargestellt ist, den Fehler und insbesondere den zugehörigen Einlenkwinkel an die Berechnungseinheit 130 weiter (siehe gestrichelte Verbindung), so dass die Berechnungseinheit 130 den Maximaleinlenkwert bei der nächsten Berechnung des Soll-Bahnverlaufs berücksichtigen kann.

## Patentansprüche

1. Verfahren zur Kalibrierung einer Einparkhilfe, die zur aktiven Steuerung eines Einlenkwinkels (ϕ) eines Fahrzeugs eingerichtet ist, umfassend die Schritte:
- automatisches Erfassen einer Parklücke mittels Sensoren (132);
- Berechnen eines Soll-Bahnverlaufs (30) anhand der erfassten Parklücke; und Steuern des Einlenkwinkels (ϕ) gemäß dem berechneten Soll-Bahnverlauf (30) mittels eines steuerbaren Aktors (110);
- Erfassen eines Ist-Bahnverlaufs, der sich durch das Steuern gemäß Soll-Bahnverlauf ergibt;
- Vergleichen des Ist-Bahnverlaufs mit dem Soll-Bahnverlauf und Ermitteln des sich aus dem Vergleich ergebenden Fehlers (70); und
- Erstellen eines Korrekturparameters, der mit dem Fehler durch eine monotone Funktion verknüpft ist, wobei das Steuern des Einlenkwinkels (ϕ) umfasst: Steuern gemäß einer Kombination des Einstellwinkels mit dem Korrekturparameter,
**dadurch gekennzeichnet, dass**
ein erster Einparkschritt umfassend die genannten Schritte und ein danach ausgeführter, zweiter Einparkschritt umfassend die genannten Schritte ausgeführt werden, wobei der zweite Einparkschritt ausgeführt wird durch Ansteuern mit einem maximalen Einlenkwinkel, der gegenüber dem ersten Einparkschritt um ein Ansteuer-Inkrement erhöht ist, und maximale Ist-Krümmungen des jeweils resultierenden Ist-Bahnverlaufs miteinander verglichen werden.

2. Verfahren nach Anspruch 1, wobei das Erfassen des Ist-Bahnverlaufs umfasst: Erfassen eines Ist-Stellwinkels mittels eines Winkelsensors (140) anhand der Stellung eines Lenkrads, eines Lenkgestänges, oder des Aktors; oder Erfassen eines des Ist-Bahnverlaufs in Form einer Ortskurve, die die Bewegung des Fahrzeugs, eines Fahrzeugteils oder zumindest eines zur Erfassung der Ist-Einparkbahn vorgesehenen Sensors wiedergibt.

3. Verfahren nach Anspruch 1 oder 2, wobei das Steuern des Einlenkwinkels umfasst: Ansteuern des Aktors mit einem Soll-Maximaleinlenkwert, und das Erfassen des Ist-Bahnverlaufs umfasst: Erfassen eines Ist-Maximaleinlenkwerts, der sich durch das Ansteuern mit dem Soll-Maximaleinlenkwert ergibt, wobei der ermittelte Fehler die Differenz zwischen Soll-Maximaleinlenkwert und Ist-Maximaleinlenkwert ist.

4. Verfahren nach Anspruch 3, wobei das Erfassen des Ist-Maximaleinlenkwerts vorgesehen wird durch (a) Ermitteln der Stellung des Lenkrads, des Lenkgestänges, oder des Aktors oder durch (b) Ermitteln der maximalen Krümmung 60, 61 eines Abschnitts des Ist-Bahnverlaufs, der sich durch den Soll-Maximaleinlenkwert ergibt, wobei der Ist-Bahnverlauf die Bewegung des Fahrzeugs wiedergibt.

5. Verfahren nach Anspruch 1, wobei mehrere Einparkschritte gemäß dem Verfahren nach einem der vorangehenden Ansprüche ausgeführt werden, das Ansteuer-Inkrement mit jedem Einparkschritt zunehmend erhöht wird, die sich bei jedem Schritt ergebende maximale Ist-Krümmung erfasst wird, und die jeweiligen maximalen Ist-Krümmungen der Schritte miteinander verglichen werden; wobei eine Zunahme der maximalen Ist-Krümmungen aufeinander folgender Einparkschritte erfasst wird und der Korrekturparameter vorgesehen wird durch Erkennung einer Verringerung oder eines Ausbleibens der Zunahme beim Vergleich von maximalen Ist-Krümmungen aufeinander folgender Schritte, wobei der Korrekturparameter eine Deckelung des ansteuerbaren Einlenkwinkels wiedergibt und zumindest eine folgende Soll-Einparkbahn mit einer Deckelung der maximalen Krümmung gleich der maximalen Ist-Krümmung vorgesehen wird.

6. Verfahren nach einem der vorangehenden Ansprüche, wobei der Soll-Bahnverlauf mit einer Krümmung vorgesehen ist, deren Betrag entlang des Soll-Bahnverlaufs kontinuierlich oder schrittweise (52) zunimmt, der Einlenkwinkel gemäß dieser Krümmung angesteuert wird, und eine Zunahme des Betrags der Krümmung des sich daraus ergebenden Ist-Bahnverlauf erfasst wird, wobei das Verfahren umfasst: Vergleichen der Krümmung des Ist-Bahnverlauf mit der Krümmung des Soll-Bahnverlaufs, Erfassen des Einlenkwinkels, bei dem die Zunahme der Krümmung des Ist-Bahnverlaufs geringer ist als die Zunahme der Krümmung des Soll-Bahnverlaufs; und Vorsehen des Korrekturparameters mit einem Wert, dieses Einlenkwinkels geringer Zunahme, wobei mindestens eine folgende Soll-Bahnverlauf mit einem gedeckelten Krümmungsbetrag (60, 60') vorgesehen wird, der dem Korrekturparameter entspricht.

7. Steuerung zur Ausführung des Verfahrens nach einem der vorangehenden Ansprüche, umfassend:
einen Eingang eingerichtet zur Erfassung der Ist-Bahnverlauf und zur Erfassung körperlicher Umgebungsmerkmale mittels der Sensoren (140); einen Ausgang eingerichtet zur Ausgabe des Einlenkwinkels an den Aktor (110); eine Berechnungseinheit (130), die mit dem Eingang und dem Ausgang verbunden ist, und die eingerichtet ist, eine Soll-Bahnverlauf anhand der Umgebungsmerkmale zu berechnen; wobei die Steuerung ferner einen Vergleicher (122) umfasst, der zum Vergleich des Ist-Bahnverlaufs mit dem Soll-Bahnverlauf und zum Ermitteln des sich aus dem Vergleich ergebenden Fehlers eingerichtet ist; und die Steuerung ferner eine Korrektureinrichtung (124, 120) umfasst, die eingerichtet ist, den Korrekturparameter in Abhängigkeit von dem Fehler zu erstellen und die Soll-Bahnverlauf, den anzusteuernden Einlenkwinkel oder beides zu korrigieren durch Kombination der Soll-Bahnverlauf bzw. des Einlenkwinkels mit dem Korrekturparameter.

8. Steuerung nach Anspruch 7, ferner umfassend: einen Winkelgeber (140), der mit dem Lenkrad, dem Lenkgestänge oder mit dem zur Betätigung der Lenkung vorgesehenen Aktors (110) mechanisch verbindbar ist, um die Winkelstellung der jeweiligen Fahrzeugkomponente zu erfassen, wobei der Winkelgeber (140) ferner mit dem Eingang verbunden ist, um an diesen Signale abzugeben, die den erfassten Winkel wiedergeben.

9. Steuerung nach Anspruch 7 oder 8, ferner umfassend: eine Inkrementiereinrichtung, die eingerichtet ist, während des selben, gemäß dem Verfahren nach einem der Ansprüche 1 - 7 ausgeführten Einparkschritts oder für aufeinander folgende, gemäß dem Verfahren nach einem der Ansprüche 1 - 7 ausgeführte Einparkschritte, den maximalen Einlenkwinkel, der am Ausgang abgegeben wird, um ein Ansteuer-Inkrement (52 a-d) zu erhöhen, wobei die Steuerung eingerichtet ist, die zugehörige maximale Krümmung der Ist-Einparkbahn zu erfassen und auszuwerten, ob die Erhöhung des Ansteuer-Inkrements zu einer maximalen Krümmung der Ist-Einparkbahn führt, die weniger als ein vordefinierter Schwellwert gegenüber einer maximalen Krümmung, die sich vor der Erhöhung des Ansteuerinkrements ergab, erhöht ist.

## Claims

1. Method for calibrating a parking aid which is configured to actively control a steering angle (ϕ) of a vehicle, comprising the steps:
- automatically sensing a parking space by means of sensors (132);
- calculating a setpoint path profile (30) on the basis of the sensed parking space; and controlling the steering angle (ϕ) according to the calculated setpoint path profile (30) by means of a controllable actuator (110);
- sensing an actual path profile which results from the control according to the setpoint path profile;
- comparing the actual path profile with the setpoint path profile and determining the error (70) resulting from the comparison; and
- producing a correction parameter which is linked to the error by a monotonous function, wherein the controlling of the steering angle (ϕ) comprises: controlling in accordance with a combination of the steering angle with the correction parameter,
**characterized in that**
a first parking step comprising the specified steps and a second parking step which is carried out thereafter and comprises the specified steps are carried out, wherein the second parking step is carried out by actuating with a maximum steering angle which is increased compared to the first parking step by an actuation increment, and maximum actual curvatures of the respectively resulting actual path profile are compared with one another.

2. Method according to Claim 1, wherein the sensing of the actual path profile comprises: sensing an actual actuating angle by means of an angle sensor (140) on the basis of the position of a steering wheel, or of a steering linkage, or of the actuator; or sensing the actual path profile in the form of a locus curve which represents the movement of the vehicle, of a vehicle component or at least of a sensor which is provided for sensing the actual parking path.

3. Method according to Claim 1 or 2, wherein the controlling of the steering angle comprises: actuating the actuator with a setpoint maximum steering value, and the sensing of the actual path profile comprises: sensing an actual maximum steering value which results from the actuation with the setpoint maximum steering value, wherein the determined error is the difference between the setpoint maximum steering value and the actual maximum steering value.

4. Method according to Claim 3, wherein the sensing of the actual maximum steering value is provided by (a) determining the position of the steering wheel, the steering linkage or the actuator or by (b) determining the maximum curvature (60, 61) of a section of the actual path profile which results from the setpoint maximum steering value, wherein the actual path profile represents the movement of the vehicle.

5. Method according to Claim 1, wherein a plurality of parking steps are carried out according to the method according to one of the preceding claims, the actuation increment is progressively increased with each parking step, the maximum actual curvature which results during each step is sensed, and the respective maximum actual curvatures of the steps are compared with one another; wherein an increase in the maximum actual curvatures of successive parking steps is sensed, and the correction parameter is provided by detecting a reduction or an absence of the increase in the comparison of maximum actual curvatures of successive steps, wherein the correction parameter represents a limitation of the actuable steering angle and at least one subsequent setpoint parking path with a limitation of the maximum curvature equal to the maximum actual curvature is provided.

6. Method according to one of the preceding claims, wherein the setpoint path profile is provided with a curvature whose absolute value increases continuously or incrementally (52) along the setpoint path profile, the steering angle is actuated according to this curvature, and an increase in the absolute value of the curvature of the resulting actual path profile is sensed, wherein the method comprises: comparing the curvature of the actual path profile with the curvature of the setpoint path profile, sensing the steering angle at which the increase in the curvature of the actual path profile is smaller than the increase in the curvature of the setpoint path profile; and providing the correction parameter with a value of this steering angle with a small increase, wherein at least one subsequent setpoint path profile is provided with a limited curvature absolute value (60, 60') which corresponds to the correction parameter.

7. Controller for carrying out the method according to one of the preceding claims, comprising:
an input configured for sensing the actual path profile and for sensing physical features in the surroundings by means of the sensors (140); an output configured for outputting the steering angle to the actuator (110); a calculation unit (130) which is connected to the input and to the output and which is configured to calculate a setpoint path profile on the basis of the features in the surroundings; wherein the controller also comprises a comparator (122) which is configured to compare the actual path profile with the setpoint path profile and to determine the error resulting from the comparison; and the controller also comprises a correction device (124, 120) which is configured to produce the correction parameter as a function of the error and to correct the setpoint path profile, the steering angle to be actuated or both by combining the setpoint path profile or the steering angle with the correction parameter.

8. Controller according to Claim 7, also comprising:
an angle signal generator (140) which can be connected mechanically to the steering wheel, to the steering linkage or to the actuator (110) which is provided for activating the steering system, in order to sense the angular position of the respective vehicle component, wherein the angle signal generator (140) is also connected to the input in order to output signals representing the sensed angle to said input.

9. Controller according to Claim 7 or 8, also comprising: an incrementing device which is configured such that, during the same parking step carried out in accordance with the method according to one of Claims 1-7 or for successive parking steps carried out in accordance with the method according to one of Claims 1-7, it increases the maximum steering angle which is output at the output, by an actuation increment (52 a-d), wherein the controller is configured to sense the associated maximum curvature of the actual parking path and to evaluate whether the increase in the actuation increment leads to a maximum curvature of the actual parking path which is increased less than a predefined threshold value compared to a maximum curvature which is resulted from the increase in the actuation increment.

## Revendications

1. Procédé de calibrage d'une aide au stationnement qui est conçue pour la commande active d'un angle de braquage (ϕ) d'un véhicule, comprenant les étapes suivantes :
- détection automatique d'un emplacement de stationnement au moyen de capteurs (132) ;
- calcul d'un tracé de trajectoire de consigne (30) à l'aide de l'emplacement de stationnement détecté ; et commande de l'angle de braquage (ϕ) conformément au tracé de trajectoire de consigne (30) calculé au moyen d'un actionneur commandable (110) ;
- détection d'un tracé de trajectoire réel qui résulte de la commande conformément au tracé de trajectoire de consigne ;
- comparaison du tracé de trajectoire réel avec le tracé de trajectoire de consigne et détermination de l'erreur (70) qui résulte de la comparaison ; et
- établissement d'un paramètre de correction qui est lié à l'erreur par une fonction monotone, la commande de l'angle de braquage (ϕ) incluant : commande conformément à une combinaison de l'angle de réglage avec le paramètre de correction,
**caractérisé en ce**
**qu'**une première étape d'entrée en stationnement incluant les étapes mentionnées et une deuxième étape d'entrée en stationnement, exécutée à la suite, incluant les étapes mentionnées sont exécutées, la deuxième étape d'entrée en stationnement étant exécutée par une commande avec un angle de braquage maximal, lequel est augmenté d'un incrément de commande par rapport à la première étape d'entrée en stationnement, et les courbures réelles maximales du tracé de trajectoire réel qui en résulte à chaque fois étant comparées entre elles.

2. Procédé selon la revendication 1, selon lequel la détection du tracé de trajectoire réel comprend : détection d'un angle de réglage réel au moyen d'un capteur d'angle (140) à l'aide de la position d'un volant de direction, d'une colonne de direction ou de l'actionneur ; ou détection de l'un des tracés de trajectoire réels sous la forme d'une courbe locale qui restitue le mouvement du véhicule, d'une partie du véhicule ou d'au moins un capteur prévu pour la détection de la trajectoire d'entrée en stationnement réelle.

3. Procédé selon la revendication 1 ou 2, selon lequel la commande de l'angle de braquage comprend : commande de l'actionneur avec une valeur de braquage maximale de consigne, et la détection du tracé de trajectoire réel comprend : détection d'une valeur de braquage maximale réelle qui résulte de la commande avec la valeur de braquage maximale de consigne, l'erreur déterminée étant la différence entre la valeur de braquage maximale de consigne et la valeur de braquage maximale réelle.

4. Procédé selon la revendication 3, selon lequel la détection de la valeur de braquage maximale réelle est prévue par (a) détermination de la position du volant de direction, de la colonne de direction ou de l'actionneur ou par (b) détermination de la courbure maximale (60, 61) d'une portion du tracé de trajectoire réel, lequel résulte de la valeur de braquage maximale de consigne, le tracé de trajectoire réel restituant le mouvement du véhicule.

5. Procédé selon la revendication 1, selon lequel plusieurs étapes d'entrée en stationnement sont exécutées conformément au procédé selon l'une des revendications précédentes, l'incrément de commande est augmenté de plus en plus à chaque étape d'entrée en stationnement, la courbure réelle maximale produite à chaque étape est détectée et les courbures réelles maximales respectives des étapes sont comparées entre elles ; selon lequel une augmentation des courbures réelles maximales des étapes d'entrée en stationnement successives est détectée et le paramètre de correction est prévu par identification d'une diminution ou d'une absence de l'augmentation lors de la comparaison des courbures réelles maximales des étapes successives, le paramètre de correction restituant un plafonnement de l'angle de braquage commandable et au moins une trajectoire d'entrée en stationnement de consigne suivante ayant un plafonnement de la courbure maximale égal à la courbure réelle maximale étant prévue.

6. Procédé selon l'une des revendications précédentes, selon lequel le tracé de trajectoire de consigne est prévu avec une courbure dont la valeur augmente continuellement ou par paliers (52) le long du tracé de trajectoire de consigne, l'angle de braquage est commandé conformément à cette courbure et une augmentation de la valeur de la courbure du tracé de trajectoire réel qui en résulte est détectée, le procédé incluant : comparaison de la courbure du tracé de trajectoire réel avec la courbure du tracé de trajectoire de consigne, détection de l'angle de braquage avec lequel l'augmentation de la courbure du tracé de trajectoire réel est inférieure à l'augmentation de la courbure du tracé de trajectoire de consigne et prévision du paramètre de correction avec une valeur de cet angle de braquage à faible augmentation, au moins un tracé de trajectoire de consigne suivant étant prévu avec une valeur de courbure plafonnée (60, 60') qui correspond à celle du paramètre de correction.

7. Commande pour mettre en oeuvre le procédé selon l'une des revendications précédentes, comprenant :
une entrée conçue pour détecter le tracé de trajectoire réel et pour détecter des caractéristiques environnementales structurelles au moyen des capteurs (140) ; une sortie conçue pour délivrer l'angle de braquage à l'actionneur (110) ; une unité de calcul (130) qui est reliée avec l'entrée et la sortie et qui est conçue pour calculer un tracé de trajectoire de consigne à l'aide des caractéristiques environnementales ; la commande comprenant en outre un comparateur (122) qui est conçu pour comparer le tracé de trajectoire réel avec le tracé de trajectoire de consigne et pour déterminer l'erreur qui résulte de la comparaison ; et la commande comprend en outre un dispositif de correction (124, 120) qui est conçu pour établir le paramètre de correction en fonction de l'erreur et pour corriger le tracé de trajectoire de consigne, l'angle de braquage à commander ou les deux par une combinaison du tracé de trajectoire de consigne ou de l'angle de braquage avec le paramètre de correction.

8. Commande selon la revendication 7, comprenant en outre : un codeur d'angle (140) qui peut être relié mécaniquement avec le volant de direction, la colonne de direction ou avec l'actionneur (110) prévu pour actionner la direction afin de détecter la position angulaire du composant correspondant du véhicule, le codeur d'angle (140) étant en outre relié avec l'entrée pour y délivrer des signaux qui restituent l'angle détecté.

9. Commande selon la revendication 7 ou 8, comprenant en outre : un dispositif d'incrémentation qui est conçu pour, pendant la même étape d'entrée en stationnement exécutée conformément au procédé selon l'une des revendications 1 à 7 ou pendant les étapes d'entrée en stationnement successives exécutées conformément au procédé selon l'une des revendications 1 à 7, augmenter l'angle de braquage maximal qui est délivré à la sortie d'un incrément de commande (52 ad), la commande étant conçue pour détecter la courbure maximale associée de la trajectoire d'entrée en stationnement réelle et pour interpréter si l'augmentation de l'incrément de commande conduit à une courbure maximale de la trajectoire d'entrée en stationnement réelle qui augmente de moins qu'une valeur de seuil prédéfinie par rapport à une courbure maximale qui était obtenue avant l'augmentation de l'incrément de commande.
